# EUROPEAN PATENT SPECIFICATION

(11) **EP 1 761 322 B1**
(45) Date of publication and mention of the grant of the patent: **02.01.2008**
(21) Application number: 05702461.4
(22) Date of filing: 09.02.2005
(51) Int. Cl.: B01D 46/24

(54) **LOW RESISTANCE AIR FILTER DEVICE**
FILTERVORRICHTUNG MIT GERINGEM WIDERSTAND
DISPOSITIF FILTRE A AIR A FAIBLE RESISTANCE

(30) Priority: 12.02.2004 IT BO20040063
(43) Date of publication of application: 14.03.2007
(73) Proprietor: BMC S.R.L., 40059 Medicina (IT)
(72) Inventor: BERGAMI, Gaetano, I-40059 Medicina (IT)
(74) Representative: Negrini, Elena
(86) International application number: PCT/IB2005/000320
(87) International publication number: WO 2005/079952

(56) References cited:
- EP-A- 1 413 347
- GB-A- 1 094 617
- US-A- 4 695 299
- US-A- 5 238 474
- US-B1- 6 638 330

## Description

### TECHNICAL FIELD

The present invention relates to the technical field concerning filter devices of the air destined to the air-fuel mixture sucked by the combustion engines and refers to a low resistance air filter device.

The known filter devices comprise an air filter, having a form flattened, cylindrical or conic, contained in a respective case having an opening in flow communication with the air intakes and a further opening connected to the engine.

### BACKGROUND ART

There are known cases whose opening connected to the engine, and therefore downstream of the filter in comparison to the air flow, it introduces strong resistances and turbulences that cause the drawback to reduce the air flow to the engine.

There are known cases for filters provided with an inner link between the inlet opening and the side wall fit to reduce the air resistance.

A drawback of such filtering devices consists in that the link allows the passage of possible extraneous object, for instance nuts or screw forgotten or fallen in the case of the filter, in the inlet collectors of the engine with serious damage risks of this latter. The risk of extraneous object presence is particularly relevant in the race filter devices that are continuously opened for inspections, cleaning, substitution also during hurried phases of job on different organs of the engine in the same time.

Further drawbacks of the said known filters consist in the fact that they increases the weight and they reduces the inside volume for the air.

Document US-A-4 695 299 discloses a cyclone having at its upper outlet side a filter. The filter comprises a tubular housing, having an inlet at its lower end and an outlet at its opposite upper end A cylindrical filter element is installed in connection with the inlet opening and a tubular body forming the outlet opening protrudes towards inside said tubular casing.

### DISCLOSURE OF THE INVENTION

A purpose of the present invention is to propose an air filter device having low resistance and able to stop possible extraneous object, also of big dimensions, in the case.

Further purpose of the present invention is to propose a device to reduce the air resistance without reducing the useful volume of the device and without getting heavy it.

Other purpose is to propose a device can be easily housed in the engine room.

The above mentioned objects are achieved according to the content of the claims.

### BRIEF DESCRIPTION OF THE DRAWINGS

The characteristics of the present invention are underlined in the following with particular reference to the enclosed drawings, in which:
- figure 1 shows a schematic longitudinal section view of the device of the present invention;
- figure 2 shows a longitudinally sectioned view sectioned by a longitudinal plan perpendicular to the one sectioning figure 1;
- figure 3 shows a top view of the figure 1 device.

### BEST MODE OF CARRYING OUT THE INVENTION

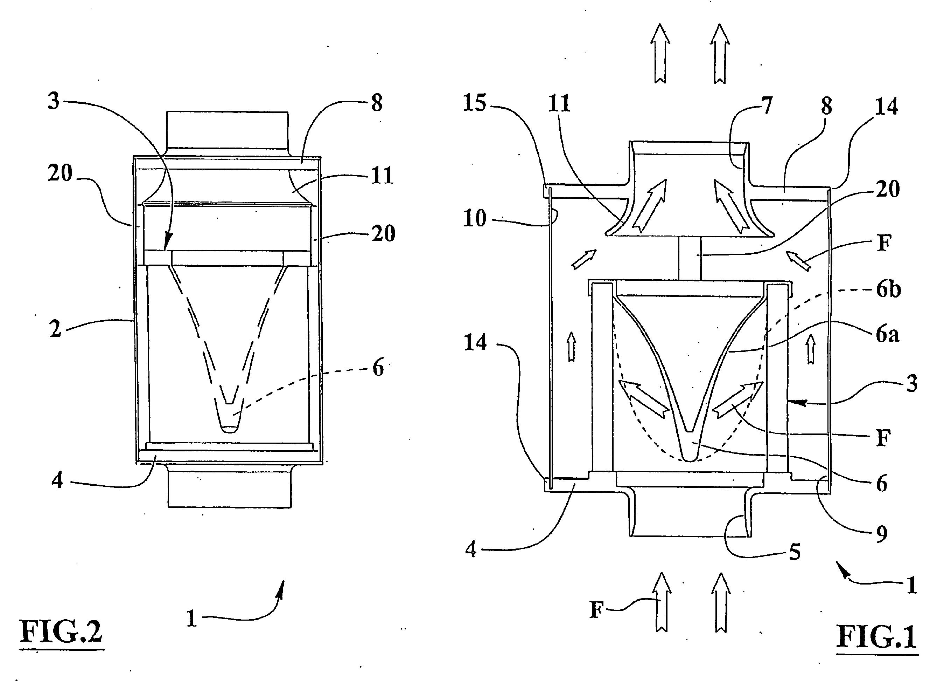

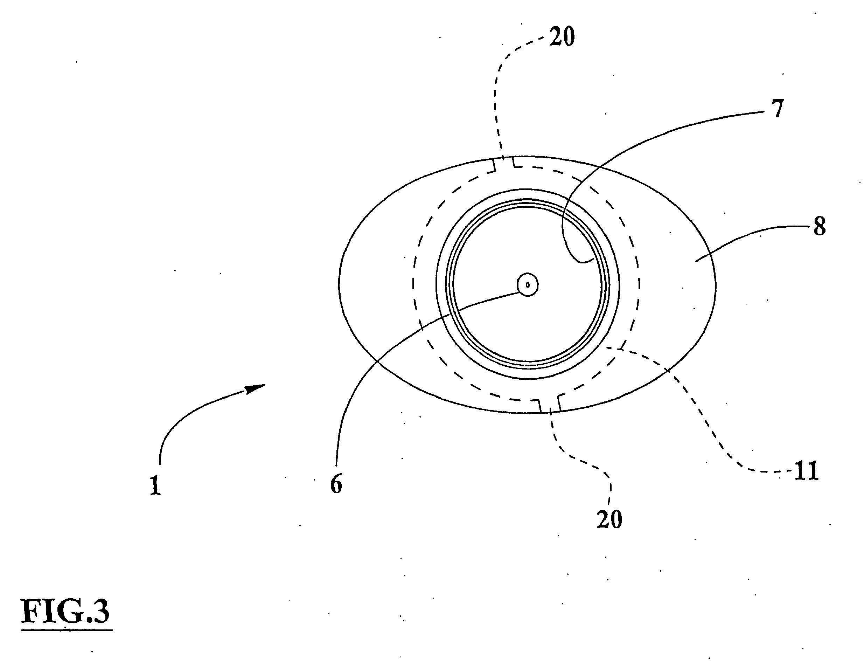

With reference to figures 1 - 3, 1 indicates a low resistance filter device for the feeding of combustion engines mainly including a tubular case 2, a filtering element 3, support means 4 and a outlet means 8.

The tubular case 2 has an elliptic or oval section and it is provided with an lower opening 9 and an upper 10. Furthermore the tubular case is preferably made of carbon fiber so that it releases a thermal insulator between the external environment and the air crossing it. The tubular case 2 is fixed to the support means 4 by fixing means 14 consisting of screw or of fastener.

The outlet means 8 are constrained to a upper opening 10 of the tubular case 2 and they are centrally provided of an outflow opening 7 in correspondence of which they present a tubular body 11 protruding toward inside of said tubular case 2. Such tubular body 11 connects, in flow communication, the inside volume of the tubular case 2 with the outflow opening 7 the same.

The form of outlet means 8 is similar to shaped flange integral with the tubular body 11 being shaped as the trumpet outlet.

Preferably the trumpet of the tubular body 11 expands, or enlarges, toward inside of the device 1. In alternative, the invention provides that the tubular body 11 is narrowed, or is restricted, toward inside of the device 1 assuming a truncated ogive shape.

The outlet means 8 are peripherally provided of a recess 14 for the housing of the inside wall of the tubular case 2 in its upper opening 10. The outlet means 8 are detachably fixed to the tubular case 2 by means of screw or fastener fixing means 15.

The device includes support means 4 fixed at the lower opening 9 of the case 2 and fit to constrain the filtering element 3 at one inlet opening 5 for the air of the support means 4 the same.

The support means 4 are discoid shaped and centrally provided of the inlet opening 5 linkable to the air intakes of the vehicle. An inner throat of the support means 4 houses an end of the filtering element 3 that can be fixed integral with the support means 4, for instance by means of adhesive or plastic material melting. In alternative the end of the filter can be detachably housed in a respective throat, annular seat shaped, of the support means 4.

The support means 4 are peripherally provided of a seat 13 for housing the inner wall of the tubular case 2 at the lower opening 9. They are made of nylon strengthened with glass fiber.

The filtering element 3 has cylindrical form and is made of cotton soaked with low viscosity oil. It is internally provided of air deflecting means 6, connected to the free end of the filtering element 3 in such way that the air flow entering from the opening 5, and pointed out by the arrows F of figure 1, it is forcedly deflected by the deflecting means 6 toward the filtering element 3. The deflected air flow crosses the filtering element 3, it crosses the interspace formed by this latter and the external case 2 and it exits, through the tubular body 11, out the outflow opening 7 entering inside air ducts in direction of the engine.

The deflecting means 6 are substantially shaped as a cone whose vertex is directed toward the inlet opening 5 and whose base is integral fixed to the free edge of the filtering element 2. In alternative it is provided that the free edge of the filtering element 2 detachably matches the base of the deflecting means 6. The substantially conic shape of the deflecting means 6 can have a concave profile 6a or convex 6b for instance of parabolic kind. More in detail, said almost conic shape of said deflecting means 6 has an axial section shaped as two half-parabolas with parallel axes and joined branches at the vertex of the deflecting means 6 making the concave 6a or the convex 6b profile.

The device includes spacer means 20, for instance made of plastics and of prismatic form, interposed between the tubular body 11 and the filtering element 3 and matching the inner wall of the tubular case 2 for the centering and stopping of the filtering element 3.

The operation of the device provides that the recess between the tubular body 11 and the inside wall of the tubular case 2 form a sort of trap fit to prevent or to reduce the risk of the passage, toward the engine, of extraneous objects as nuts, screws, washer, split pin and the like. The conformation of the tubular body 11 provides a low resistance and low dynamic losses of air flow feeding the engine without heaviness and without reducing the inside volume of the device in a remarkable manner.

An advantage of the present invention is to propose an air filter device having low resistance able to stop extraneous object, also having big dimensions, inside the case downstream filter without reducing the useful volume of the device and without getting heavy it.

Other advantage is to propose a device can be easily housed in the engine room trough its oval or elliptic section shape.

## Claims

1. Low resistance air filter device comprising a tubular case (2) for at least a tubular shaped filtering element (3) fixed to a lower opening (9) of the case (2) said device being provided, at its apposite upper opening (10), of outlet means (8) provided with an outflow opening (7) for the air, said device (1) being **characterized in that** the outlet means (8), at the outflow opening (7) are provided with a trumpet shaped tubular body (11) protruding toward inside of said tubular case (2) and connecting, in flow communication, the inner volume of the tubular case with the outflow opening (7) the same; the inside of the free end of the filtering element (3) being provided with deflecting means (6) provided to forcedly deflect the air flow towards the filter.

2. Device according to claim 1 **characterized in that** the outlet means (8) are formed as a shaped flange integral with the tubular body (11).

3. Device according to claim 1 **characterized in that** the trumpet of the tubular body (11) enlarges toward inside of the device (1).

4. Device according to claim 1 **characterized in that** the trumpet of the tubular body (11) is narrowed toward inside the device (1).

5. Device according to claim 1 **characterized in that** it comprises support means (4) fixed at the lower opening (9) of the case (2) and fit to bind at one inlet opening (5) for the air of the support means (4) the same, said filtering element (3).

6. Device according to claim 1 **characterized in that** said outlet means (8) are peripherally provided of a recess (14) for housing the inside wall of said tubular case (2) at its upper opening (10).

7. Device according to claim 1 **characterized in that** said outlet means (8) are

8. Device according to claim 1 **characterized in that** said deflecting means (6) are substantially shaped as a cone whose vertex is directed toward the inlet opening (5) and whose base is integral fixed to the free edge of the filtering element (3).

9. Device according to claim 8 substantially **characterized in that** said almost conic shape of said deflecting means (6) has an axial section shaped as two half-parabolas with parallel axes and joined branches at the vortex of the defecting means (6) making a concave (6a) or convex (6b) profile.

10. Device according to claim 1 **characterized in that** said tubular case (2) has an elliptic or oval section.

11. Device according to claim 1 **characterized in that** said tubular case (2) is made of carbon fiber.

12. Device according to claim 1 **characterized in that** said filtering element (3) is in cotton soaked with low viscosity oil.

13. Device according to claim 1 **characterized in that** said support means (4) are peripherally provided of a seat (13) for housing the inside wall of said tubular case (2) at its lower opening (9).

14. Device according to claim 1 **characterized in that** said tubular case (2) is detachably stopped to said support means (4) through fixing means (14).

15. Device according to claim 1 **characterized in that** said support means (4) are made out of nylon strengthened with glass fiber.

16. Device according to claim 1 **characterized in that** said filtering element (3) is cylindrical.

17. Device according to claim 1 **characterized in that** it includes spacer means (20) positioned between the tubular body (11) and the filtering element (3).

18. Device according to claim 17 **characterized in that** the spacer means (20) matches the inside wall of the tubular case (2).

## Patentansprüche

1. Luftfiltervorrichtung geringen Widerstands, mit einem rohrförmigen Gehäuse (2) für wenigstens ein rohrförmiges Filterelement (3), das an einer unteren Öffnung (9) des Gehäuses (2) befestigt ist, wobei die Vorrichtung an ihrer entgegen gesetzten oberen Öffnung (10) mit Auslassmitteln (8) versehen ist, die mit einer Auslauföffnung (7) für die Luft ausgestattet sind, wobei die Vorrichtung (1) **dadurch gekennzeichnet ist, dass** die Auslassmittel (8) an der Auslauföffnung (7) mit einem trompetenförmigen Rohrkörper (11) versehen sind, der zu der Innenseite des rohrförmigen Gehäuses (2) hin vorsteht und in Fluidverbindung das Innenvolumen des rohrförmigen Gehäuses mit der Auslauföffnung (7) für dasselbe verbindet; wobei die Innenseite des freien Endes des Filterelements (3) mit Ablenkmitteln (6) versehen ist, die zum zwangsmäßigen Ablenken des Luftstroms in Richtung zu dem Filter vorgesehen sind.

2. Vorrichtung nach Anspruch 1, **dadurch gekennzeichnet, dass** die Auslassmittel (8) als geformter, mit dem Rohrkörper (11) einstückiger Flansch ausgebildet sind.

3. Vorrichtung nach Anspruch 1, **dadurch gekennzeichnet, dass** sich die Trompete des Rohrkörper (11) zu der Innenseite der Vorrichtung (1) hin erweitert.

4. Vorrichtung nach Anspruch 1, **dadurch gekennzeichnet, dass** sich die Trompete des Rohrkörpers (11) zu der Innenseite der Vorrichtung (1) hin verengt.

5. Vorrichtung nach Anspruch 1, **dadurch gekennzeichnet, dass** sie Stützmittel (4) umfasst, die an der unteren Öffnung (9) des Gehäuses (2) befestigt sind und an einer Einlassöffnung (5) für die Luft der Stützmittel (4) für dieselbe das Filterelement (3) binden kann.

6. Vorrichtung nach Anspruch 1, **dadurch gekennzeichnet, dass** die Auslassmittel (8) am Umfang mit einer Ausnehmung (14) zum Aufnehmen der Innenwand des rohrförmigen Gehäuses (2) an derssen oberer Öffnung (10) versehen sind.

7. Vorrichtung nach Anspruch 1, **dadurch gekennzeichnet, dass** die Auslassmittel (8) mit Hilfe von Befestigungsmitteln (15) lösbar an dem rohrförmigen Gehäuse (2) befestigt sind.

8. Vorrichtung nach Anspruch 1, **dadurch gekennzeichnet, dass** die Ablenkmittel (6) im Wesentlichen als Konus geformt sind, dessen Scheitelpunkt zu der Einlassöffnung (5) hin gerichtet ist, und dessen Basis einstückig an dem freien Rand des Filterelements (3) befestigt ist.

9. Vorrichtung nach Anspruch 8, im Wesentlichen **dadurch gekennzeichnet, dass** die fast konische Form der Ablenkmittel (6) einen axialen Abschnitt aufweist, der als zwei Halbparabeln mit parallelen Achsen und verbundenen Zweigen an dem Scheitelpunkt der Ablenkmittel (6) geformt ist, was ein konkaves (6a) oder ein konvexes (6b) Profil ergibt.

10. Vorrichtung nach Anspruch 1, **dadurch gekennzeichnet, dass** das rohrförmige Gehäuse (2) einen elliptischen oder ovalen Abschnitt aufweist.

11. Vorrichtung nach Anspruch 1, **dadurch gekennzeichnet, dass** das rohrförmige Gehäuse (2) aus Kohlefaser besteht.

12. Vorrichtung nach Anspruch 1, **dadurch gekennzeichnet, dass** das Filterelement (3) aus mit Öl niedriger Viskosität getränkter Baumwolle besteht.

13. Vorrichtung nach Anspruch 1, **dadurch gekennzeichnet, dass** die Stützmittel (4) am Umfang mit einem Sitz (13) zum Aufnehmen der Innenwand des rohrförmigen Gehäuses (2) an seiner unteren Öffnung versehen sind.

14. Vorrichtung nach Anspruch 1, **dadurch gekennzeichnet, dass** das rohrförmige Gehäuse (2) durch Befestigungsmittel (14) lösbar an den Stützmitteln (4) in Anschlag steht.

15. Vorrichtung nach Anspruch 1, **dadurch gekennzeichnet, dass** die Stützmittel (4) aus mit Glasfaser verstärktem Nylon gefertigt sind.

16. Vorrichtung nach Anspruch 1, **dadurch gekennzeichnet, dass** das Filterelement (3) zylindrisch ist.

17. Vorrichtung nach Anspruch 1, **dadurch gekennzeichnet, dass** sie ein Abstandshaltemittel (20) umfasst, das zwischen dem Rohrkörper (11) und dem Filterelement (3) positioniert ist.

18. Vorrichtung nach Anspruch 17, **dadurch gekennzeichnet, dass** das Abstandshaltemittel (20) an die Innenwand des rohrförmigen Gehäuses (2) angepasst ist.

## Revendications

1. Dispositif filtre à air à faible résistance comprenant un boîtier tubulaire (2) destiné à au moins un élément filtrant en forme de tube (3) fixé à une ouverture inférieure (9) du boîtier (2), ledit dispositif étant muni, à son ouverture supérieure opposée (10), de moyens de sortie (8) pourvus d'une ouverture d'échappement (7) de l'air, ledit dispositif (1) étant **caractérisé en ce que** les moyens de sortie (8) sont munis au niveau de l'ouverture d'échappement (7) d'un corps tubulaire (11) en forme de trompette qui fait saillie vers l'intérieur dudit boîtier tubulaire (2) et qui relie, en communication fluidique, le volume intérieur du boîtier tubulaire à l'ouverture d'échappement (7) de celui-ci ; l'intérieur de l'extrémité libre de l'élément filtrant (3) étant pourvu de moyens déflecteurs (6) prévus pour dévier de force l'écoulement d'air vers le filtre.

2. Dispositif selon la revendication 1, **caractérisé en ce que** les moyens de sortie (8) sont constitués d'une bride profilée incorporée au corps tubulaire (11).

3. Dispositif selon la revendication 1, **caractérisé en ce que** la forme de trompette du corps tubulaire (11) s'élargit vers l'intérieur du dispositif (1).

4. Dispositif selon la revendication 1, **caractérisé en ce que** la forme de trompette du corps tubulaire (11) se rétrécit vers l'intérieur du dispositif (1).

5. Dispositif selon la revendication 1, **caractérisé en ce qu'**il comprend des moyens de support (4) fixés à l'ouverture inférieure (9) du boîtier (2) et qui sont ajustés pour lier le même dit élément filtrant (3) à une ouverture d'entrée (5) d'air des moyens de support (4).

6. Dispositif selon la revendication 1, **caractérisé en ce que** lesdits moyens de sortie (8) sont munis sur leur pourtour d'un évidement (14) destiné à recevoir la paroi intérieure dudit boîtier tubulaire (2) au niveau de son ouverture supérieure (10).

7. Dispositif selon la revendication 1, **caractérisé en ce que** lesdits moyens de sortie (8) sont fixés de manière amovible audit boîtier tubulaire (2) au moyen de dispositifs de fixation (15).

8. Dispositif selon la revendication 1, **caractérisé en ce que** lesdits moyens de déflecteurs (6) ont sensiblement une forme de cône dont le sommet est dirigé vers l'ouverture d'entrée (5) et dont la base est fixée de manière intégrale au bord libre de l'élément filtrant (3).

9. Dispositif selon la revendication 8, **caractérisé** essentiellement en ce que ladite forme presque conique des dits moyens déflecteurs (6) a une section axiale en forme de deux demi paraboles d'axes parallèles et dont les branches se joignent au sommet des moyens déflecteurs (6) pour constituer un profil concave (6a) ou convexe (6b).

10. Dispositif selon la revendication 1, **caractérisé en ce que** ledit boîtier tubulaire (2) a une section elliptique ou ovale.

11. Dispositif selon la revendication 1, **caractérisé en ce que** ledit boîtier tubulaire (2) est constitué de fibre de carbone.

12. Dispositif selon la revendication 1, **caractérisé en ce que** ledit élément filtrant (3) est en coton imbibé d'huile de faible viscosité.

13. Dispositif selon la revendication 1, **caractérisé en ce que** lesdits moyens de support (4) sont munis sur leur pourtour d'une embase (13) destinée à recevoir la paroi intérieure dudit boîtier tubulaire (2) au niveau de son ouverture inférieure (9).

14. Dispositif selon la revendication 1, **caractérisé en ce que** ledit boîtier tubulaire (2) s'aboute de manière amovible aux dits moyens de support (4) à travers des dispositifs de fixation (14).

15. Dispositif selon la revendication 1, **caractérisé en ce que** lesdits moyens de support (4) sont constitués de nylon renforcé avec de la fibre de verre.

16. Dispositif selon la revendication 1, **caractérisé en ce que** ledit élément filtrant (3) est cylindrique.

17. Dispositif selon la revendication 1, **caractérisé en ce qu'**il comprend des moyens d'écartement (20) positionnés entre le corps tubulaire (11) et l'élément filtrant (3).

18. Dispositif selon la revendication 17, **caractérisé en ce que** les moyens d'écartement (20) s'apparient à la paroi intérieure du boîtier tubulaire (2).
